**Europäisches Patentamt**

**European Patent Office**

**Office européen des brevets**

(19)

(11) Veröffentlichungsnummer: **0 456 895 A1**

# (12) EUROPÄISCHE PATENTANMELDUNG

(21) Anmeldenummer: 90123180.3

(22) Anmeldetag: 04.12.90

(51) Int. Cl.⁵: **F02F 11/00**, F16J 15/02, F16J 15/32

(30) Priorität: 18.05.90 DE 4016020

(43) Veröffentlichungstag der Anmeldung:
**21.11.91 Patentblatt 91/47**

(84) Benannte Vertragsstaaten:
**DE FR GB IT**

(71) Anmelder: **GOETZE AG**
**Bürgermeister-Schmidt-Strasse 17**
**W-5093 Burscheid 1(DE)**

(72) Erfinder: **Jamann, Karl-Heinz, Dipl.-Ing.**
**Ottoherscheid 82**
**W-5060 Bergisch-Gladbach 1(DE)**
Erfinder: **Ecker, Rainer, Dipl.-Ing.**
**Huflandstrasse 20**
**W-5090 Leverkusen 3(DE)**

(54) Gehäuseverschlussdeckel.

(57) Die Erfindung betrifft einen Gehäuseverschluß-deckel, insbesondere für Kurbelwellengehäuse mit von unten anflanschbarer Ölwanne. Zur statischen Abdichtung weist der Verschlußdeckel mehrere Flanschflächen auf. Die Flanschfläche zur Ölwanne weist einen Dichtstreifen auf, welcher über eine flexible Dichtlippe eine dichte Verbindung zur Ölwanne erzeugt.

FIG. 1

Die Erfindung betrifft einen Gehäuseverschlußdeckel mit einer im Einbauzustand durch den Dek-kel sich erstreckenden Welle, insbesondere für Kurbelwellengehäuse mit von unten anflanschbarer Ölwanne, mit einer dynamischen Dichtung für die Welle, wobei die dynamische Dichtung aus minde-stens einer gegebenenfalls federbelasteten, elasti-schen, anvulkanisierten Dichtlippe besteht, sowie zwei unter einem Winkel von überlicherweise 90 Grad aufeinandertreffenden statisch abzudichtenden Flanschflächen, deren eine radial zur dichten Verbindung mit dem Kurbelwellengehäuse und deren andere axial zur dichten Verbindung mit der Ölwanne sich erstreckt, wobei für die statische Abdichtung beider Flanschflächen axial beziehungsweise radial aus den Flanschflächen hervortretende Dichtstreifen vorgesehen sind.

Die DE-PS 36 34 735 offenbart einen Gehäuseverschlußdeckel der genannten Gattung. Der Ge-häuseverschlußdeckel besteht aus einem topfför-mig gezogenen Blechkörper, der zur Abdichtung der Kurbelwelle einen dynamisch belasteten Dichtungsring aus elastomerem Werkstoff sowie statisch wirkende Dichtstreifen, ebenfalls aus elastomerem Werkstoff, die einstückig ineinander übergehen, aufweist. Zur Abdichtung der von unten gegen das Kurbelwellengehäuse verschraubbaren Ölwanne dient ein Dichtstreifen, welcher aus der axialen Flanschfläche heraustritt. Im Gehäuseverschlußdeckel sind zwei Muttern eingeschweißt, so daß beim Anschrauben der Ölwanne der genannte Dichtstreifen zwischen Gehäusedeckel und Ölwan-ne mit ausreichender Flächenpressung zusammen-gedrückt werden kann, um so eine Dichtheit zu erzeugen. Versuche haben ergeben, daß in der Mitte zwischen den Schrauben eine Schwachstelle gegeben ist, und zwar deformiert sich der Gehäuseverschlußdeckel beim Anziehen der Schrauben, so daß keine ausreichende Flächenpressung mehr in diesem Bereich vorhanden ist. Hinzu kommt, daß teilweise durch starke Relativbewegungen zwischen Ölwanne und Kurbelgehäuse die Befestigungsschrauben am unteren Gehäuseverschlußdeckel ausreißen. Die Dichtheit des Systems kann somit nicht gewährleistet werden.

Der Erfindung liegt die Aufgabe zugrunde, einen gattungsgemäßen Gehäuseverschlußdeckel im Bereich der Ölwannendichtebene zu verbessern, so daß auch bei hohen dynamischen Kräften eine dauerhafte Dichtung erzeugt wird.

Diese Aufgabe wird erfindungsgemäß dadurch gelöst, daß der Dichtstreifen zur dichten Verbindung mit der Ölwanne mindestens eine flexible Dichtlippe aufweist. Auf diese Weise besteht die Möglichkeit, auf die sonst übliche Verschraubung zu verzichten, da durch die Anordnung einer flexiblen Dichtlippe als statische Dichtung eine gleichmäßige und ausreichend große Flächenpressung erzeugt wird. Durch die erfindungsgemäße Konstruktion ist der Gehäuseverschlußdeckel elastisch von der Ölwanne abgekoppelt, damit kann beim Anschrauben der Ölwanne an das Kurbelwellengehäuse kein Verzug am Gehäuseverschlußdeckel auftreten, gleichzeitig ist gewährleistet, daß die statische Dichtstelle bei dynamischer Belastung (d.h. bei einer Relativbewegung zwischen Ölwanne und Gehäuseverschlußdeckel) ausreichende Dichtheit aufweist. Vorzugsweise ist die Dichtlippe durch axiale Aushöhlung des Dichtstreifens gebildet. Die Dichtlippe besteht darüber hinaus aus einem elastomeren Werkstoff mit einer Shore-Härte A kleiner gleich 70. Hierdurch ist die Dichtlippe in der Lage sich der Oberfläche der Ölwanne, welche in der Regel nicht feinbearbeitet ist, gut anzupassen. Darüber hinaus verläuft die Dichtlippe unter einem spitzen Winkel zur Ölwanne.

Die Erfindung ist in der Zeichnung dargestellt und wird im folgenden näher erläutert. Es zeigen:

Figur 1 Ansicht eines erfindungsgemäßen Gehäuseverschlußdeckels

Figur 2 Ausschnittsvergrößerung gemäß II-II

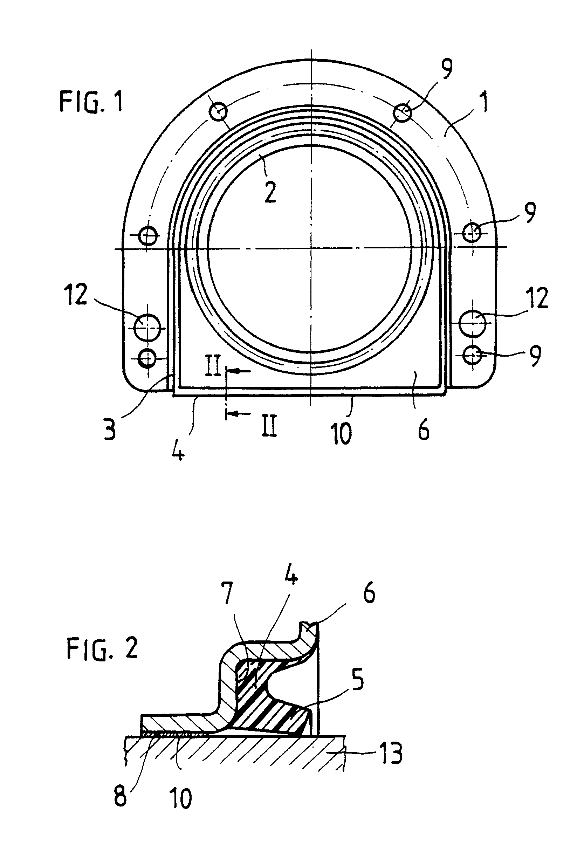

Der in der Figur 1 dargestellte Gehäuseverschlußdeckel dient zur Abdichtung eines Kurbelwellengehäuses eines Kraftfahrzeugmotors mit von un-ten anflanschbarer Ölwanne. Der Gehäusever-schlußdeckel (1) besteht aus einem topfförmig gezogenen Blechkörper, der zur Abdichtung der im Einbauzustand hin- und hergehenden Kurbelwelle (nicht gezeichnet), einem dynamisch belasteten Dichtungsring (2) aus elastomerem Werkstoff sowie aus statisch wirkende Dichtstreifen (3 und 4), ebenfalls aus elastomerem Werkstoff, die einstückig ineinander übergehen, aufweist. Der Dichtstreifen (3) dient zur statischen Abdichtung des Kurbelwellengehäuses (nicht gezeichnet) und der Dichtstreifen (4) zur Abdichtung der Ölwanne (13) (Figur 2). Im Einbauzustand liegt eine radiale Flanschfläche (6) mit dem Dichtstreifen (3) am Kurbelwellengehäuse und wird mit Hilfe von durch Löcher (9) steckbaren Schrauben verspannt. Zur lagegerechten Fixierung dienen Bohrungen (12) für Zentrierstifte. Eine weitere radiale Flanschfläche (7) (Figur 2), die gegenüber der Flanschfläche (6) axial zurückgesetzt ist, dient zur Aufnahme des Dichtstreifens (4) (Figur 2). Durch Aushöhlung des Dichtstreifens (4) ist eine flexible Dichtlippe (5) gebildet, welche die statische Abdichtung zur Ölwanne (13) übernimmt. Die Ölwanne (13) stützt sich radial an einer axialen Flanschfläche (10) ab, wobei zwischen Ölwanne (13) und Flanschfläche (10) eine Dichtung oder eine Dichtungsmasse (8) angeordnet ist. Die erfindungsgemäße Dichtlippe (5) erzeugt aufgrund ihrer guten Flexibilität eine ausreichende Dichtheit, so daß im Bereich des Gehäuseverschlußdeckels keine Schraubverbindung notwendig ist. Die Überdek-kung zwischen Dichtlippe (5) und Ölwanne (13) sorgt für eine ausreichende Flächenpressung.

**Patentansprüche**

1. Gehäuseverschlußdeckel mit einer im Einbauzustand durch den Deckel sich erstreckenden Welle, insbesondere für Kurbelwellengehäuse mit von unten anflanschbarer Ölwanne, mit einer dynamischen Dichtung für die Welle, wobei die dynamische Dichtung aus mindestens einer gegebenenfalls federbelasteten, elastischen, anvulkanisierten Dichtlippe besteht sowie zwei unter einem Winkel von üblicherweise 90 Grad aufeinandertreffenden statisch abzudichtenden Flanschflächen, deren eine radial zur dichten Verbindung mit dem Kurbelwellengehäuse und deren andere axial zur dichten Verbindung mit der Ölwanne sich erstreckt, wobei für die statische Abdichtung beider Flanschflächen axial beziehungsweise radial aus den Flanschflächen hervortretende Dichtstreifen vorgesehen sind, dadurch gekennzeichnet, daß mindestens der Dichtstreifen (4) zur dichten Verbindung mit der Ölwanne (13) mindestens eine flexible Dichtlippe (5) aufweist.

2. Gehäuseverschlußdeckel nach Anspruch 1, dadurch gekennzeichnet, daß die Dichtlippe (5) durch axiale Aushöhlung des Dichtstreifens (4) gebildet ist.

3. Gehäuseverschlußdeckel nach den Ansprüchen 1 und 2, dadurch gekennzeichnet, daß die Dichtlippe (5) aus elastomerem Werkstoff mit einer Shore-Härte A kleiner gleich 70 besteht.

4. Gehäuseverschlußdeckel nach den Ansprüchen 1 bis 3, dadurch gekennzeichnet, daß die Dichtlippe (5) unter einem spitzen Winkel zur Ölwanne (13) verläuft.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 443 623 (SUDDEUTSCHE KUHLERFABRIK JU-LUIS &CO.KG)<br>* Seite 6, Zeile 3 - Seite 7, Zeile 4; Figur 2 *<br>– – – | 1 | F 02 F 11/00<br>F 16 J 15/02<br>F 16 J 15/32 |
| A | US-A-3 353 832 (COULSON)<br>* Spalte 1, Zeile 54 - Spalte 2, Zeile 37; Figuren *<br>– – – | 1 | |
| A | EP-A-0 241 350 (S.E.P)<br>* Zusammenfassung; Figuren *<br>– – – | 1 | |
| A | US-A-2 655 135 (DALENBERG)<br>– – – | | |
| A | EP-A-0 120 123 (GOETZE AG)<br>– – – – – | | |

| | RECHERCHIERTE SACHGEBIETE (Int. Cl.5) |
|---|---|
| | F 02 F<br>F 16 J |

Der vorliegende Recherchenbericht wurde für alle Patentansprüche erstellt

| Recherchenort | Abschlußdatum der Recherche | Prüfer |
|---|---|---|
| Den Haag | 06 August 91 | MOUTON J.M.M.P. |